# EUROPEAN PATENT APPLICATION

(11) **EP 1 542 465 A1**
(43) Date of publication of application: **15.06.2005**
(21) Application number: 03797602.4
(22) Date of filing: 16.09.2003
(51) Int. Cl.: H04N 7/14

(54) **SIGN LANGUAGE INTERPRETATION SYSTEM AND SIGN LANGUAGE INTERPRETATION METHOD**

(30) Priority: 17.09.2002 JP 2002269850
(71) Applicant: Ginganet Corporation, Osaka-shi, Osaka 556-0017 (JP)
(72) Inventor: SAHASHI, Nozomu, Kishiwada-shi, Osaka 596-0045 (JP)
(74) Representative: Schoppe, Fritz, Dipl.-Ing.
(86) International application number: PCT/JP2003/011757
(87) International publication number: WO 2004/028161

(57) **Abstract**

A sign language interpretation system and a sign language interpretation method are provided which are available even in an emergency without prior consultation between a deaf-mute person, a non-deaf-mute person and a sign language interpreter and reservation of an MCU. A sign language interpretation system (100) has a function to interconnect a deaf-mute person terminal, a non-deaf-mute person terminal (310) and a sign language interpreter terminal (320) as well as a function to synthesize a video/audio signal received from each terminal and transmit a synthesized signal to each terminal in order to provide a videophone conversation service via sign language interpretation between the deaf-mute person and the non-deaf-mute person. A controller (180) includes a sign language interpreter registration table (182) where the selection information and terminal number of a sign language interpreter as well as an availability flag are registered. An available sign language interpreter satisfying the selection conditions specified by a caller is selected by way of a call from the deaf-mute person or non-deaf-mute person. The terminal for sign language interpreters and the calling terminal are called and automatically interconnected. A function is provided to register a word difficult to explain and display the word in a telop while a conversation is under way.

## Description

### Technical Field

The present invention relates to a sign language interpretation system and a sign language interpretation method which allow, by using a videophone, a deaf-mute person capable of using sign language to have a conversation with a non-deaf-mute person incapable of using sign language, and more particularly, the present invention relates to a sign language interpretation system and a sign language interpretation method which provide a deaf-mute person with administration services over a videophone even when a person capable of using sign language is not present in an administrative body, such as a public office, a hospital and a police station.

### Background Art

A deaf-mute person who is hearing and speaking impaired communicates with a non-deaf-mute person by means of writing or sign language. Fluent conversation is difficult by way of communications in writing. Moreover, a very small number of non-deaf-mute persons can use sign language. These problems present a substantial barrier in the social life of a deaf-mute person.

While a conversation using sign language over a videophone is available at a practical level with the advancement of communications technologies, a deaf-mute person can have a conversation over videophone with a non-deaf-mute person who cannot use sign language only when a sign language interpreter joins the conversation.

In particular, in an administrative body such as a public office, a hospital and a police station, it is difficult to assign a person capable of using sign language. Thus, in order to provide a deaf-mute person with services from such an administrative body in an emergency, it is necessary to arrange videophone terminals at the home of a mute-deaf person and an administrative body as well as establish a sign language interpretation system which allows a deaf-mute person to have a conversation with a non-deaf-mute person over a videophone via sign language interpretation.

In order for a non-deaf-mute person and a deaf-mute person to have a conversation over a videophone, it is necessary to interconnect a videophone terminal used by deaf-mute persons, a videophone terminal used by non-deaf-mute persons and a videophone terminal used by sign language interpreters. In the conventional art, it has been necessary to establish a videoconference among the videophone terminals for deaf-mute persons, non-deaf-mute persons and sign language interpreters by using a Multipoint Connection Unit (MCU) which interconnects videophone terminals in at least three locations.

However, in order to establish a videoconference by using an MCU, a deaf-mute person, a non-deaf-mute person and a sign language interpreter must hold prior consultations with one another and reserve the MCU. It is difficult for a deaf-mute person and a non-deaf-mute person to hold prior consultation.

In an emergency, reservation of the MCU is impossible. The MCU which assumes reservation is practically unavailable.

Thus, a main object of the invention is to provide a sign language interpretation system and a sign language interpretation method which are available even in an emergency without prior consultation between a deaf-mute person, a non-deaf-mute person and a sign language interpreter and reservation of the MCU.

### Disclosure of the Invention

The invention described in claim 1 is a sign language interpretation system which interconnects a videophone terminal for deaf-mute persons used by a deaf-mute person capable of using sign language, a videophone terminal for non-deaf-mute persons used by a non-deaf-mute person incapable of using sign language, and a videophone terminal for the sign language interpreter used by the sign language interpreter in order to provide sign language interpretation in a conversation between a deaf-mute person and a non-deaf-mute person over a videophone, characterized in that the system comprises connection means equipped with a sign language interpreter registration table where the terminal number of the videophone terminal for sign language interpreters is registered, the connection means including a function to accept a call from the videophone terminal for deaf-mute persons or the videophone terminal for non-deaf-mute persons, a function to prompt a calling videophone terminal for which the call is accepted to enter the terminal number of the called terminal, a function to extract the terminal number of a sign language interpreter from the sign language interpreter registration table, a function to call the videophone terminal for sign language interpreters by using the extracted terminal number of the sign language interpreter, and a function to call the called videophone terminal by using the acquired called terminal number and
communications means including a function to synthesize at least a video from the videophone terminal for non-deaf-mute persons and a video from the videophone terminal for sign language interpreters and transmit the resulting video to the videophone terminal for deaf-mute persons, a function to transmit at least a video from the videophone terminal for deaf-mute persons and a voice from the videophone terminal for sign language interpreters to the videophone terminal for non-deaf-mute persons and a function to transmit at least a video from the videophone terminal for deaf-mute persons and a voice from the videophone terminal for non-deaf-mute persons to the videophone terminal for sign language interpreters.

With this configuration, upon a call from a terminal for deaf-mute persons or a terminal for non-deaf-mute persons, the target terminal and the terminal for sign language interpreters are automatically connected and a video and a voice required for sign language interpretation are transmitted, thereby a conversation over a videophone via sign language interpretation can be provided without the deaf-mute person, non-deaf-mute person and sign language interpreter holding prior consultation.

As a function to extract and call the terminal number of a sign language interpreter registered in a sign language interpreter registration table is included, a sign language interpreter can present a sign language interpretation anywhere he/she may be, as long as he/she can be called, thereby a flexible and efficient sign language interpretation system can be provided.

The invention described in claim 2 is the sign language interpretation system according to claim 1, characterized in that selection information for selecting a sign language interpreter is registered in the sign language interpreter registration table and that
the connection means includes a function to acquire the conditions for selecting a sign language interpreter from the calling videophone terminal and a function to extract the terminal number of a sign language interpreter who satisfies the extracted selection conditions from the sign language interpreter registration table.

With this configuration, a sign language interpreter who satisfies the object of the conversation over a videophone between a deaf-mute person and a non-deaf-mute person from among the sign language interpreters registered in the sign language interpreter registration table can be selected.

The invention described in claim 3 is the sign language interpretation system according to claim 1 or 2, characterized in that an availability flag to indicate whether a sign language interpreter is available is registered in the sign language interpreter registration table and that the connection means includes a function to extract the terminal number of an available sign language interpreter by referencing the availability flags in the sign language interpreter registration table.

With this configuration, available sign language interpreter are automatically selected for calling by registering whether a sign language interpreter is available in the sign language interpreter registration table. This invention eliminates useless calling and provides a more flexible and efficient sign language interpretation system.

The invention described in claim 4 is the sign language interpretation system according to any one of the claims 1 through 3, characterized in that the connection means includes a function to generate a text message to be transmitted to each of the terminals and that
the communications means includes a function to transmit the generated text message to each of the terminals.

With this configuration, a text message which prompts each terminal to enter necessary information when connecting a terminal for deaf-mute persons, a terminal for non-deaf-mute persons and a terminal for sign language interpreters can be transmitted.

The invention described in claim 5 is the sign language interpretation system according to claim 4, characterized in that the connection means includes a function to generate a voice message to be transmitted to the terminal for non-deaf-mute persons and that
the communications means includes a function to transmit the generated voice message to the videophone terminal for non-deaf-mute persons.

With this configuration, a voice message which prompts a terminal for non-deaf-mute persons to enter necessary information when connecting a terminal for deaf-mute persons, a terminal for non-deaf-mute persons and a terminal for sign language interpreters can be transmitted, thereby enabling visually impaired persons to have a videophone conversation with deaf-mute persons via the sign language interpreter with the use of the terminal for non-deaf-mute persons.

The invention described in claim 6 is the sign language interpretation system according to any one of claims 1 through 5, characterized in that the connection means includes a function to register a term used during a conversation as instructed from each of the terminals and a function to extract the registered term and generate a telop as instructed from each of the terminals and that
the communications means includes a function to transmit the generated telop to each of the terminals.

With this configuration, a term hard to represent through sign language interpretation is displayed as a telop on the screen of each terminal by previously registering the term, which provides a quicker and more accurate videophone conversation.

The invention described in claim 7 is the sign language interpretation system according to any one of claims 1 through 6, characterized in that the communications means includes a function to transmit a video obtained by synthesizing a video from the videophone terminal for non-deaf-mute persons or the videophone terminal for sign language interpreters as a main window and the other video as a sub window to the videophone terminal for deaf-mute persons.

With this configuration, a video of a non-deaf-mute person and a video of a sign language interpreter are displayed simultaneously on the screen of the videophone terminal for deaf-mute persons in a Picture-in-Picture representation, thereby the deaf-mute person can understand the sign language of the sign language interpreter while watching the face of the non-deaf-mute person.

The invention described in claim 8 is the sign language interpretation system according to any one of claims 1 through 7, characterized in that the communications means includes a function to transmit a video obtained by synthesizing a video from the videophone terminal for non-deaf-mute persons as a main window and a video from the videophone terminal for sign language interpreters as a main window to the videophone terminal for non-deaf-mute persons.

With this configuration, a video of a deaf-mute person and a video of a sign language interpreter are displayed simultaneously on the screen of the videophone terminal for non-deaf-mute persons in a Picture-in-Picture fashion, thereby the non-deaf-mute person can check the facial expression of the sign language interpreter while watching the face expression of the deaf-mute person, which facilitates understanding of a voice interpreted by the sign language interpreter.

The invention described in claim 9 is the sign language interpretation system according to any one of claims 1 through 8, characterized in that the communications means includes a function to transmit a video obtained by synthesizing a video from the videophone terminal for deaf-mute persons and a video from the videophone terminal for non-deaf-mute persons to the videophone terminal for sign language interpreters.

With this configuration, a video of a deaf-mute person and a video of a non-deaf-mute person are displayed simultaneously on the screen of the videophone terminal for sign language interpreters in a Picture-in-Picture representation, thereby the sign language interpreter can check the facial expression of the non-deaf-mute person while understanding the sign language of the deaf-mute person, which facilitates understanding of the voice of the non-deaf-mute person.

The invention described in claim 10 is a method for providing sign language interpretation in a conversation between a deaf-mute person and a non-deaf-mute person over a videophone, the method interconnecting a videophone terminal for deaf-mute persons used by a deaf-mute person capable of using sign language, a videophone terminal for non-deaf-mute persons used by a non-deaf-mute person incapable of using sign language, and a videophone terminal for the sign language interpreter used by the sign language interpreter,
characterized in that a sign language interpreter registration table where the terminal number of the videophone terminal for sign language interpreters is registered, the method comprising step of: accepting a call from the videophone terminal for deaf-mute persons or the videophone terminal for non-deaf-mute persons; acquiring the terminal number of a called terminal from calling videophone terminal for which the call is accepted; extracting the terminal number of a sign language interpreter from the sign language interpreter registration table; calling the videophone terminal for sign language interpreters by using the extracted terminal number of the sign language interpreter; calling the called videophone terminal by using the acquired called terminal number;
synthesizing at least a video from the videophone terminal for non-deaf-mute persons and a video from the videophone terminal for sign language interpreters and transmitting the resulting video to the videophone terminal for deaf-mute persons; transmitting at least a video from the videophone terminal for deaf-mute persons and a voice from the videophone terminal for sign language interpreters to the videophone terminal for non-deaf-mute persons; and transmitting at least a video from the videophone terminal for deaf-mute persons and a voice from the videophone terminal for non-deaf-mute persons to the videophone terminal for sign language interpreters.

With this configuration, upon a call from a terminal for deaf-mute persons or a terminal for non-deaf-mute persons, the target terminal and the terminal for sign language interpreters are automatically connected and a video and a voice required for sign language interpretation are transmitted, thereby a conversation over a videophone via sign language interpretation can be provided without the deaf-mute person, non-deaf-mute person and sign language interpreter holding prior consultation.

As a step to extract and call the terminal number of a sign language interpreter registered in a sign language interpreter registration table is comprised, a sign language interpreter can present sign language interpretation anywhere he/she may be, as long as he/she can be called, thereby a flexible and efficient sign language interpretation system can be provided.

The above object, other objects, characteristics and advantages of the invention will be apparent from the following detailed description of the embodiments of the invention.

### Brief Description of the Drawings

Fig. 1 is a system block diagram of a sign language interpretation system according to an embodiment of the presentinvention;
Fig. 2 shows an example of a video displayed on each screen of a terminal for deaf-mute persons, a terminal for non-deaf-mute persons, or a terminal for sign language interpreters of a sign language interpretation system according to the embodiment of the present invention;
Fig. 3 is a processing flowchart of a controller in a sign language interpretation system according to an embodiment of the invention;
Fig. 4 shows an example of a sign language interpreter registration table;
Fig. 5 shows an example of a screen for prompting input of a called terminal number;
Fig. 6 shows an example of a screen for prompting input of sign language interpreter selecting conditions;
Fig. 7 shows an example of a screen for displaying a list of sign language interpreter candidates;
Fig. 8 is a system block diagram of a sign language interpretation system according to another embodiment of the present invention;
Fig. 9 shows an example of a connection table; and
Fig. 10 is a processing flowchart of a controller in a sign language interpretation system according to another embodiment of the present invention.

### Best Mode for Carrying Out the Invention

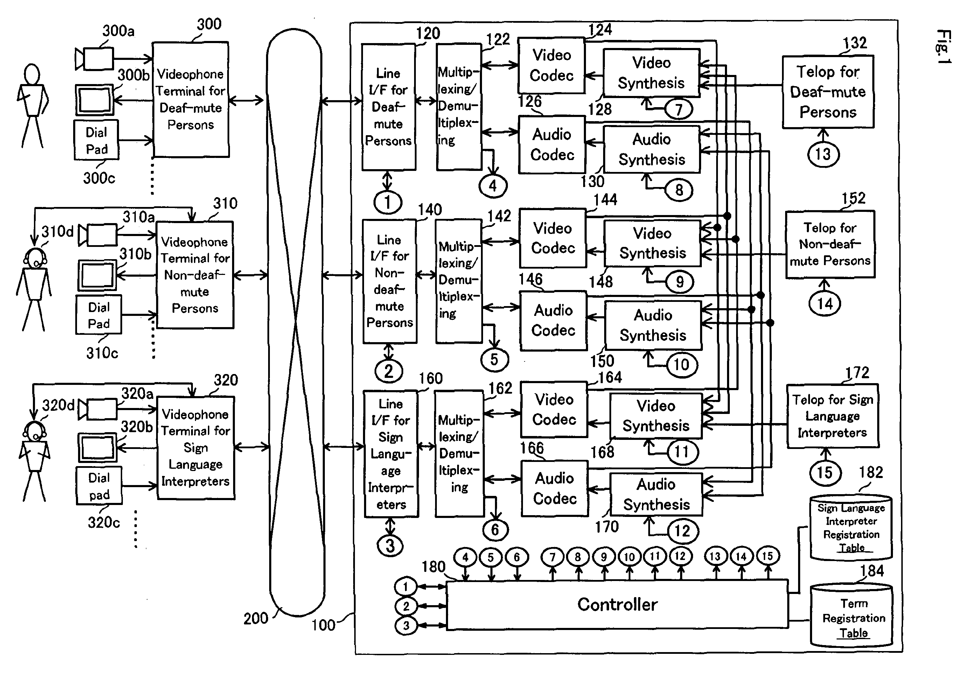

Fig. 1 is a system block diagram of a sign language interpretation system according to an embodiment of the present invention. This embodiment shows a system configuration example in which a terminal used by a deaf-mute person, a non-deaf-mute person or a sign language interpreter is a telephone-type videophone terminal connected to a public telephone line.

In Fig. 1, numeral 100 represents a sign language interpretation system installed in a sign language interpretation center which provides a sign language interpretation service. The sign language interpretation system 100 interconnects a videophone terminal for deaf-mute persons used by a deaf-mute person (hereinafter referred to as a deaf-mute person terminal) 300, a videophone terminal for non-deaf-mute persons used by a non-deaf-mute person (hereinafter referred to as a non-deaf-mute person terminal) 310 through a public telephone line 200, and a videophone terminal for sign language interpreters used by a sign language interpreter (hereinafter referred to as a sign language interpreter terminal) 320 to provide a videophone conversation service between a deaf-mute person and a non-deaf-mute person via sign language interpretation.

The deaf-mute person terminal 300, non-deaf-mute person terminal 310 and sign language interpreter terminal 320 respectively include television cameras 300a, 310a, 320a for imaging each user, display screens 300b, 310b, 320b for displaying the received video, and dial pads 300c, 310c, 320c for inputting a telephone number or information. The non-deaf-mute person terminal 310 and sign language interpreter terminal 320 include headsets 310d, 320d which provides the user with input/output of voice. While input/output of voice is made using a handset on a typical telephone-type terminal, a headset is used instead in order to keep free both hands of the user whose major concern is sign language. In the following description, a terminal uses a headset that is worn on the head of the user including a non-deaf-mute person. While a headset is not shown on the deaf-mute person terminal 300, a headset may be used and voice communications may be used as well, in case a helper is there.

Such a videophone terminal connected to a public line may be an ISDN videophone terminal based on ITU-T recommendation H.320. However, the invention is not limited thereto and may use a videophone terminal which uses a unique protocol.

The public telephone line may be of a wireless type. The videophone terminal may be a cellular phone or a portable terminal equipped with a videophone function.

The sign language interpretation system 100 includes a line interface for the deaf-mute person terminal to connect to a deaf-mute person terminal (hereinafter referred to as an I/F) 120, a line I/F for the non-deaf-mute person terminal 140 to connect to a non-deaf-mute person terminal, and a line I/F for the sign language interpreter terminal 160 to connect to a sign language interpreter terminal. To each I/F are connected a multiplexer/demultiplexer 122, 142, 162 for multiplexing/demultiplexing a video signal, an audio signal or a data signal, a video CODEC (coder/decoder) 124, 144, 164 for compressing/expanding a video signal, and an audio CODEC 126, 146, 166 for compressing/expanding an audio signal. Each line I/F, each multiplexer/demultiplexer, and each video CODEC or each audio CODEC perform call control, streaming control compression/expansion of a video/audio signal in accordance with a protocol used by each terminal.

To the video input of the video CODEC 124 for the deaf-mute person terminal 124 is connected a video synthesizer 128 for synthesizing the video output of the video CODEC for the non-deaf-mute person terminal 144, the video output of the video CODEC for the sign language interpreter terminal 164 and the output of the telop memory for the deaf-mute person terminal 132.

To the audio input of the audio CODEC for the deaf-mute person terminal 126 is connected an audio synthesizer 130 for synthesizing the audio output of the audio CODEC for the non-deaf-mute person terminal 146 and the audio output of the audio CODEC for the sign language interpreter terminal 166.

While audio input/output is generally not provided on a deaf-mute person terminal, such that the audio CODEC 126 or the audio synthesizer 130 for the deaf-mute person terminal may be omitted, a voice communications function is preferably provided for a situation where the environment sound of a deaf-mute person terminal is to be transmitted to a non-deaf-mute person terminal or a situation where a helper assists the deaf-mute person.

To the video input of the video CODEC for the non-deaf-mute person terminal 144 is connected a video synthesizer 148 for synthesizing the video output of the video CODEC for the deaf-mute person terminal 124, the video output of the video CODEC for the sign language interpreter terminal 164 and the output of the telop memory for the non-deaf-mute person terminal 152.

To the audio input of the audio CODEC for the non-deaf-mute person terminal 146 is connected an audio synthesizer 150 for synthesizing the audio output of the audio CODEC for the deaf-mute person terminal 126 and the audio output of the audio CODEC for the sign language interpreter terminal 166.

While video display of a sign language interpreter may be omitted on a non-deaf-mute person terminal, understanding of the voice interpreted by the sign language interpreter is made easy by displaying the video of the sign language interpreter, so that a function is preferably provided to synthesize the video of a sign language interpreter.

To the video input of the video CODEC for the sign language interpreter terminal 164 is connected a video synthesizer 168 for synthesizing the video output of the video CODEC for the deaf-mute person terminal 124, the video output of the video CODEC for the non-deaf-mute person terminal 144 and the output of the telop memory for the sign language interpreter terminal 172.

To the audio input of the audio CODEC for the sign language interpreter terminal 166 is connected an audio synthesizer 170 for synthesizing the audio output of the audio CODEC for the deaf-mute person terminal 126 and the audio output of the audio CODEC for the non-deaf-mute person terminal 146.

While video display of a non-deaf-mute person may be omitted on a sign language interpreter terminal, understanding of the voice in interpreting the voice of a non-deaf-mute person is facilitated by displaying the video of the non-deaf-mute person, such that a function is preferably provided to synthesize the video of a non-deaf-mute person.

The sign language interpretation system 100 is equipped with a sign language interpreter registration table 182 where the terminal number of a terminal for sign language interpreters used by a sign language interpreter is registered and includes a controller 180 connected to each of the line I/Fs 120, 140, 160, multiplexers/demultiplexers 122, 144, 162, video synthesizers 128, 148, 168, audio synthesizers 130, 150, 170, and telop memories 132, 152, 172. The controller 180 provides a function to connect a calling terminal, a sign language interpreter terminal and a called terminal by way of a function to accept a call from a deaf-mute person terminal or a non-deaf-mute person terminal, a function to prompt a calling terminal to enter the called terminal number, a function to extract the terminal number of a sign language interpreter from the sign language interpreter registration table 182, a function to call the extracted terminal number, and a function to call the terminal number of the called terminal, and also provides a function to switch a video/audio synthesis method used by video/audio synthesizers and a function to generate a telop and transmit the telop to a telop memory.

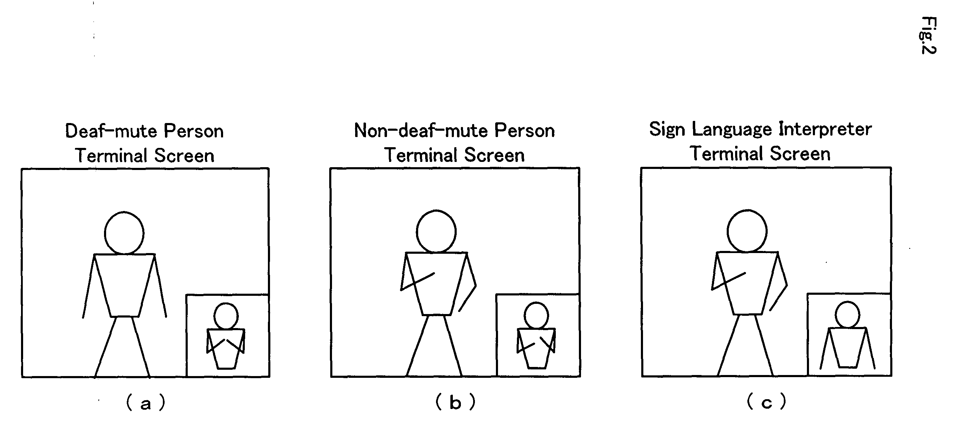

Fig. 2 shows an example of a video displayed on the screen of each terminal during a videophone conversation by way of the sign language interpretation system according to the invention. Fig. 2(a) shows the screen of a deaf-mute person terminal. A video synthesizer 128 displays on the screen a video obtained by synthesizing a video of a non-deaf-mute person terminal and a video of a sign language interpreter terminal. While the video of the non-deaf-mute person is displayed as a main window and the video of the sign language interpreter is displayed as a sub window in a Picture-in-Picture fashion, a Picture-in-Picture display is also possible assuming the video of the sign language interpreter as a main window and the video of the non-deaf-mute person as a sub window. Or, these videos may be displayed in equal size. When the video of a sign language interpreter is displayed in a larger size, the sign language interpreted by the sign language interpreter is easier to understand. A command from a terminal is preferably used to change the position of a sub window in the Picture-in-Picture display so that the sub window will not mask important information in the main window.

Fig. 2(b) shows the screen of a non-deaf-mute person terminal. The video synthesizer 148 displays on the screen a video obtained by synthesizing a video of a deaf-mute person terminal and a video of a sign language interpreter terminal. While the video of the deaf-mute person is displayed as a main window and the video of the sign language interpreter is displayed as a sub window in a Picture-in-Picture fashion, only the video of the deaf-mute person may be displayed and the video of the sign language interpreter may be omitted. By displaying the video of the sign language interpreter in a sub window, the voice interpreted by the sign language interpreter becomes easier to understand.

Fig. 2(c) shows the screen of a sign language interpreter terminal. The video synthesizer 168 displays on the screen a video obtained by synthesizing a video of a deaf-mute person terminal and a video of a non-deaf-mute person terminal. While the video of the deaf-mute person is displayed as a main window and the video of the non-deaf-mute person is displayed as a sub window in a Picture-in-Picture fashion, only the video of the deaf-mute person may be displayed and the video of the non-deaf-mute person may be omitted. By displaying the video of the non-deaf-mute person in a sub window, the voice of the non-deaf-mute person interpreted by the sign language interpreter is easier to understand.

In order to support a situation in which the environment sound of a deaf-mute person terminal is to be transmitted or a situation in which a helper assists the deaf-mute person, a voice obtained by synthesizing the voice from the non-deaf-mute person terminal and the voice from the sign language interpreter terminal by using the audio synthesizer 130 is output to the deaf-mute person terminal, a voice obtained by synthesizing the voice from the deaf-mute person terminal and the voice from the sign language interpreter terminal by using the audio synthesizer 150 is output to the non-deaf-mute person terminal and a voice obtained by synthesizing the voice from the non-deaf-mute person terminal and the voice from the deaf-mute person terminal by using the audio synthesizer 170 is output to the sign language interpreter terminal.

When it is not necessary to transmit the environmental sound of the deaf-mute person terminal or a helper is not present, the audio synthesizers 130, 150 and 170 may be omitted, and the output of the audio CODEC for the non-deaf-mute person terminal 146 may be connected to the input of the audio CODEC for the sign language interpreter terminal 166 and the output of the audio CODEC for the sign language interpreter terminal 166 may be connected to the input of the audio CODEC for the non-deaf-mute person terminal 146.

Operation of the video synthesizers 128, 148, 168 and audio synthesizers 130, 150, 170 is controlled by the controller 180. The user may change the video output method or audio output method by pressing a predetermined number button of a dial pad of each terminal. This is done when a press of the number button on the dial pad of each terminal is detected as a data signal or a tone signal by the multiplexer/demultiplexer 122, 144, 162 and detection of the press of the button is signaled to the controller.

With this configuration, flexibility in the usage of the system on each terminal is ensured. For example, only necessary videos or audios are selected and displayed/output in accordance with the object, or it is possible to replace a main window with a sub window, or change the position of the sub window.

To the input of the audio synthesizers 128, 148, 168 are respectively connected a telop memory for the deaf-mute person terminal 132, a telop memory for the non-deaf-mute person terminal 152, and a telop memory for the sign language interpreter terminal 172. Contents of each telop memory 132, 152, 172 are set from the controller 180.

With this configuration, by setting a message to be displayed on each terminal to the telop memories 132, 152, 172 and issuing an instruction to select a signal of the telop memories 132, 152, 172 to the audio synthesizers 128, 148, 168 in the setup of a videophone conversation via sign language interpretation, it is possible to transmit necessary messages to respective terminals to establish a three-way call.

When there is a term that is difficult to explain using sign language or a word that is difficult to pronounce in a videophone conversation, it is possible to register the term in advance in the term registration table 184 of the controller 180 in association with the number of the dial pad on each terminal. By doing so, it is possible to detect a push on the dial pad on each terminal during a videophone conversation, extract the term corresponding to the number of the dial pad pressed from the term registration table, generate a text telop, and set the text telop to each telop memory, thereby displaying the term on each terminal.

With this configuration, a term which is difficult to explain using sign language or a word which is difficult to pronounce is transmitted by way of a text telop to the opponent party, thus, providing a quicker and more to-the-point videophone conversation.

Next, a processing flow of the controller 180 for setting up a videophone conversation via sign language interpretation is shown.

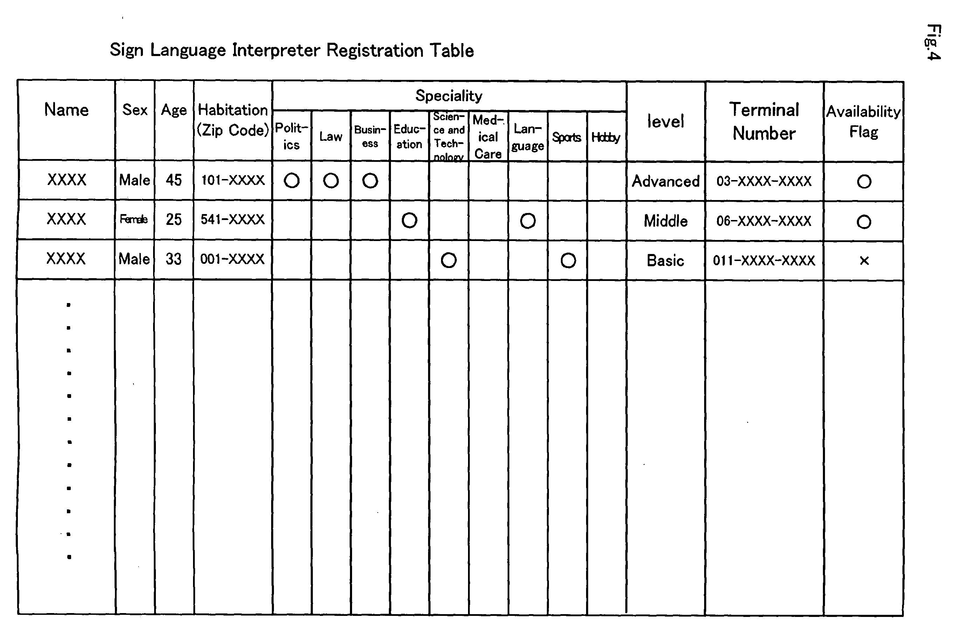

Prior to processing, information to select a sign language interpreter and the terminal number of a terminal used by each sign language interpreter are registered in the sign language interpreter registration table 182 of the controller 180 from an appropriate terminal (not shown). Fig. 4 shows an example of a registration item to be registered in the sign language interpreter registration table 182. The information to select a sign language interpreter refers to information used by the user to select a desired sign language interpreter, which includes sex, age, habitation, specialty, and the level of sign language interpretation. The habitation assumes a situation in which the user desires a person who has geographic knowledge on a specific area and, in this example, a ZIP code is used to specify an area. The specialty assumes a situation in which, in case the conversation pertains to a specific field, the user desires a person who has expert knowledge of the field or is familiar with the topics in the field. In this example, the fields a sign language interpreter is familiar with are classified into several categories to be registered, such as politics, law, business, education, science and technology, medical care, language, sports, and hobby. The specialties are diverse, such that they may be registered hierarchically and searched through at a level desired by the user when selected.

In addition, qualifications of each sign language interpreter may be registered in advance for the user to select a qualified person as a sign language interpreter.

The terminal number to be registered is the telephone number of the terminal, because in this example a videophone terminal connected to a public telephone line is provided.

In the sign language interpreter registration table 182, an availability flag is provided to indicate whether sign language interpretation can be accepted. A registered sign language interpreter can call the sign language interpretation center from his/her terminal and enter a command by using a dial pad to set/reset the availability flag. Thus, a sign language interpreter registered in the sign language interpreter registration table can set the availability flag only when he/she is available for sign language interpretation, thereby eliminating useless calling and allowing the user to select an available sign language interpreter without delay.

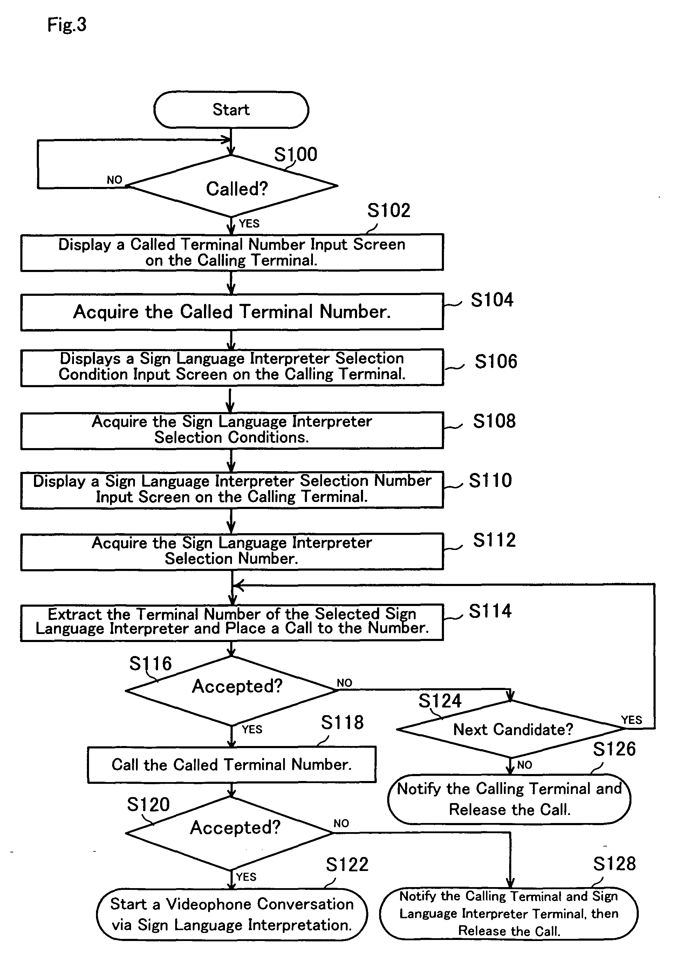

Fig. 3 shows a processing flowchart of the controller 180. The sign language interpretation system 100 allows a deaf-mute person terminal or non-deaf-mute person terminal to propose a sign language interpretation service. From the deaf-mute person terminal, the user places a call to a telephone number on the line I/F for the deaf-mute person terminal. From the non-deaf-mute person terminal, the user places a call to a telephone number on the line I/F for the non-deaf-mute person terminal. This calls the sign language interpreter terminal and the opponent terminal and establishes a videophone connection via sign language interpretation.

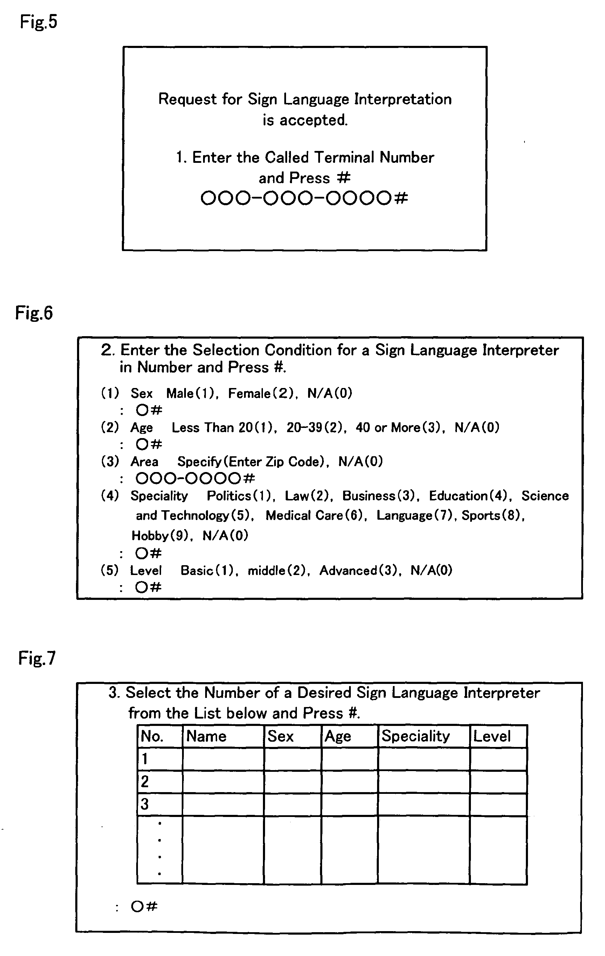

As shown in Fig. 3, it is first detected that the line I/F for the deaf-mute person terminal 120 or line I/F for the non-deaf-mute person terminal 140 is called (S100). Next, the calling terminal displays a screen to prompt input of the terminal number of the called party shown in Fig. 5 (S102). The terminal number of the called party input by the caller is acquired (S104). The calling terminal displays a screen to prompt input of the selection conditions for a sign language interpreter shown in Fig. 6 (S106). The sign language interpreter selection conditions input by the caller are acquired (S108). The sign language interpreter selection conditions input by the caller are sex, age bracket, area, specialty and sign language level. A corresponding sign language interpreter is selected based on the sex, age, habitation, specialty, and sign language level registered in the sign language interpreter registration table 182. The area is specified by using a ZIP code and a sign language interpreter is selected starting with the habitation closest to the specified area. For any selections, in case it is not necessary to specify a condition, N/A may be selected.

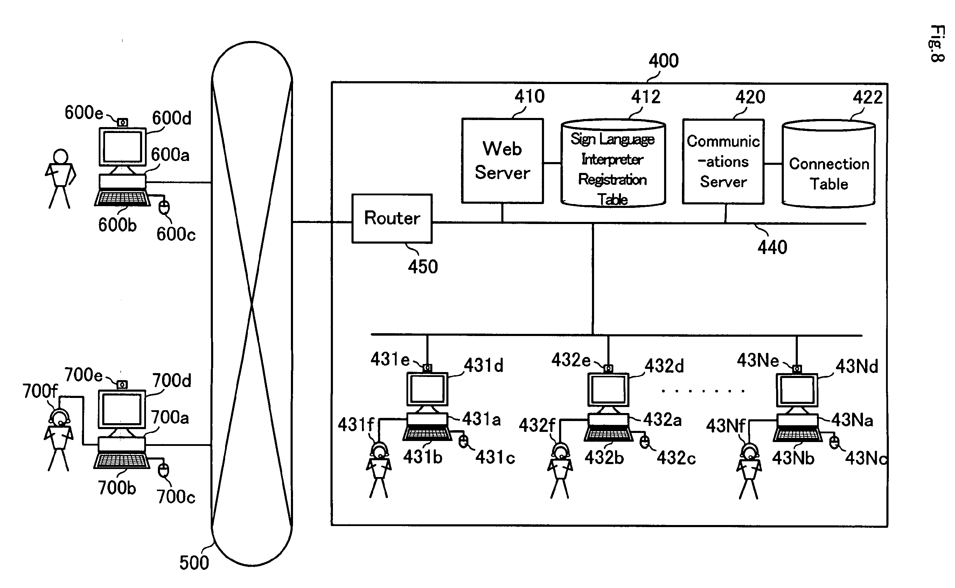

Next, a sign language interpreter with an availability flag set is selected from among the sign language interpreters satisfying the selection conditions acquired referring to the sign language interpreter registration table 182. The calling terminal displays a list of sign language interpreter candidates shown in Fig. 7 to prompt input of the selection number of a desired sign language interpreter (S110). The selection number of the sign language interpreter input by the caller is acquired (S112) and the terminal number of the selected sign language interpreter is extracted from the sign language interpreter registration table 182 and the terminal is called (S114). When the sign language interpreter terminal has accepted the call (S116), the called terminal number is extracted and called (S118). When the called terminal has accepted the call (S120), a videophone conversation via sign language interpretation starts (S122).

In case the sign language interpreter terminal selected in S166 does not accept the call, whether a next candidate is available is determined (S124). In case a next candidate is available, execution returns to S114 and the procedure is repeated. Otherwise, the calling terminal is notified as such and the call is released (S126).

In case the called terminal does not accept the call in S120, the calling terminal and the selected sign language interpreter terminal are notified as such and the call is released (S128).

If case the selected sign language interpreter terminal does not accept the call, the caller is notified as such and the call is released in the above embodiment, a sign language interpretation reservation table to register a calling terminal number and a called terminal number may be provided, and the caller and the called party may be notified on a later response from the selected sign language interpreter to set a videophone conversation.

While the sign language interpretation system 100 preferably includes a line I/F, a multiplexer/demultiplexer, a video CODEC, an audio CODEC, a video synthesizer, an audio synthesizer and a controller in the above embodiment, these components need not be provided by individual hardware (H/W). Instead, the function of each component may be provided based on software running on a computer.

While the sign language interpreter terminal 320, similar to the deaf-mute person terminal 300 and the non-deaf-mute person terminal 310, is located outside the sign language interpretation center and called from the sign language interpretation center over a public telephone line to provide a sign language interpretation service in the above embodiment, the invention is not limited thereto. Part or all of the sign language interpreters may be provided in the sign language interpretation center to provide a sign language interpretation service from the sign language interpretation center.

In the above-described embodiment, a sign language interpreter can join a sign language interpretation service anywhere he/she may be, as long as he/she has a terminal which can be connected to a public telephone line. Thus, the sign language interpreter can provide a sign language interpretation service by using the availability flag to make efficient use of free time. By doing so, it is possible to stably operate a sign language interpretation service even with the problem of difficult reservation of a sign language interpreter. In particular, the number of volunteer sign language interpreters is increasing presently. A volunteer who is available only irregularly can provide a sign language interpretation service by taking advantage of limited free time.

While a video signal of the home terminal is not input to the video synthesizers 128, 148, 168 in the above embodiment, a function may be provided to input the video signal of the home terminal for later synthesis and display to check the video on the terminal.

While the video synthesizers 128, 148, 168 and the audio synthesizers 130, 150 170 are used to synthesize videos and audios for each terminal in the above embodiment, videos and audios from all terminals may be synthesized at the same time, and the resulting video or audio may be transmitted to each terminal.

While a function is provided whereby the telop memories 132, 152, 172 are provided and telops are added to the video synthesizers 128, 148, 168 in order to display a text telop on each terminal in the above embodiment, a function may be provided whereby a telop memory to store audio information and telops are added to the audio synthesizers 130, 150, 170 in order to output an audio message on each terminal. This makes it possible to set a videophone conversation via sign language interpretation even when the non-deaf-mute person is a visually impaired person.

Fig. 8 is a system block diagram of a sign language interpretation system according to another embodiment of the invention. This embodiment shows a system configuration example in which each terminal used by a deaf-mute person, a non-deaf-mute person and a sign language interpreter is an IP (Internet Protocol) type videophone terminal to connect to the internet equipped with a web browser.

In Fig. 8, a numeral 400 represents a sign language interpretation system installed in a sign language interpretation center to provide a sign language interpretation service. The sign language interpretation system 400 connects a deaf-mute person terminal 600 used by a deaf-mute person, a non-deaf-mute person terminal 700 used by a non-deaf-mute person, and any of the sign language interpreter terminals used by a sign language interpreter 431, 432, ... via the Internet 500 in order to provide a videophone conversation service via sign language interpretation between the deaf-mute person and the non-deaf-mute person.

While the deaf-mute person terminal 600, the non-deaf-mute person terminal 700 and the sign language interpreter terminals 431, 432,... each includes a general-purpose processing device (a) such as a personal computer having a video input I/F function, an audio input/output I/F function and a network connection function, the processing device equipped with a keyboard (b) and a mouse (C) for input of information as well as a display (d) for displaying a web page screen presented by a web server 410 and a videophone screen supplied by a communications server 420, a television camera (e) for imaging the sign language of a sign language interpreter, and a headset (f) for performing audio input/output for the sign language interpreter, the processing device has IP videophone software and a web browser installed in this example, a dedicated videophone terminal may be used instead.

The videophone terminal connected to the Internet may be an IP videophone terminal based on ITU-T recommendation H.323. However, the present invention is not limited thereto, and may use a videophone terminal which has a unique protocol.

The Internet may be of a wireless LAN type. The videophone terminal may be a cellular phone or a portable terminal equipped with a videophone function and including a web access function.

The sign language interpretation system 400 includes a communications server 420 including a connection table 422 for setting the terminal addresses of a deaf-mute person terminal, a non-deaf-mute person terminal and a sign language interpreter terminal, and a function to interconnect the terminals registered in the connection table 422 and synthesize a video and an audio received from each terminal, and transmit the synthesized video and audio to each terminal, a web server 410 including a sign language interpreter registration table 412 for registering the selection information, terminal address and availability flag of a sign language interpreter as described above, and a function to select a desired sign language interpreter based on an access from a calling terminal using a web browser and set the terminal address of each of the calling terminal, called terminal and sign language interpreter terminal in the connection table 422 of the communication server 420, a router 450 for connecting the web server 410 and the communications server 420 to the Internet, and a plurality of sign language interpreter terminals 431, 432,..., 43N connected to the communications server 420 via a network.

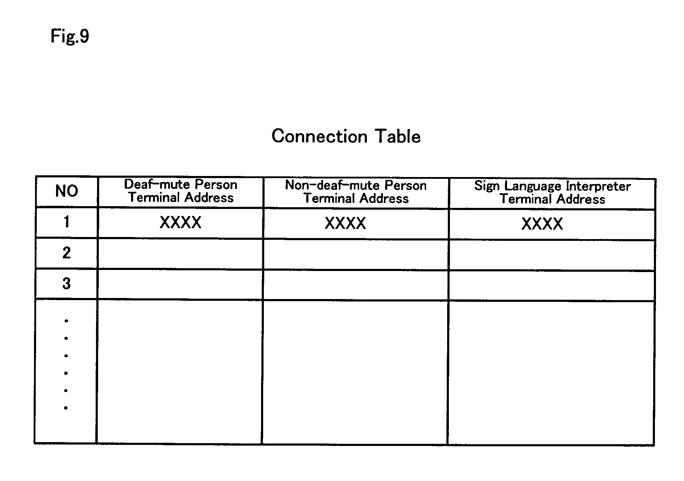

Fig. 9 shows an example of a connection table 422. As shown in Fig. 9, the terminal address of a deaf-mute person terminal, the terminal address of a non-deaf-mute person terminal and the terminal address of a sign language interpreter terminal are registered as a set in the connection table 422. This provides a single sign language interpretation service. The connection table 422 is designed to register a plurality of such terminal address set depending on the throughput of the communications server 420, thereby simultaneously providing a plurality of sign language interpretation services.

While the terminal address registered in the connection table 422 is an address on the Internet and is generally an IP address, the present invention is not limited thereto. For example a name given by a directory server may be used.

The communications server 420 performs packet communications using a predetermined protocol with the deaf-mute person terminal, non-deaf-mute person terminal and sign language interpreter terminal set to the connection table 422 and provides, by way of software processing, functions similar to those provided by a multiplexer/demultiplexer 122, 142, 162, a video CODEC 124, 144, 164, an audio CODEC 126, 146, 166, a video synthesizer 128, 148, 168, an audio synthesizer 130, 150, 170 in the above-described sign language interpretation system 100.

With this configuration, similar to the sign language interpretation system 100, predetermined videos and audios are communicated between a deaf-mute person terminal, a non-deaf-mute person terminal and a sign language interpreter terminal, and a videophone conversation via sign language interpretation is established between the deaf-mute person and the non-deaf-mute person.

While the sign language interpretation system 100 preferably uses the controller 180 and the telop memories 132, 152, 172 to extract a term registered in the term registration table 184 during a videophone conversation based on instructions from a terminal and displays the term as a telop on the terminal, the same function may be provided via software processing by the communications server 420 in this embodiment. A term specified by each terminal may be displayed as a popup message on the other terminal via the web server 410. Or, a telop memory may be provided in the communications server 420 such that a term specified by each terminal will be written into the telop memory via the web server 410 and displayed as a text telop on each terminal.

While the sign language interpretation system 100 uses the controller 180 to interconnect a deaf-mute person terminal, a non-deaf-mute person terminal and a sign language interpreter terminal, the connection procedure is made by the web server 410 in this embodiment because each terminal has a web access function.

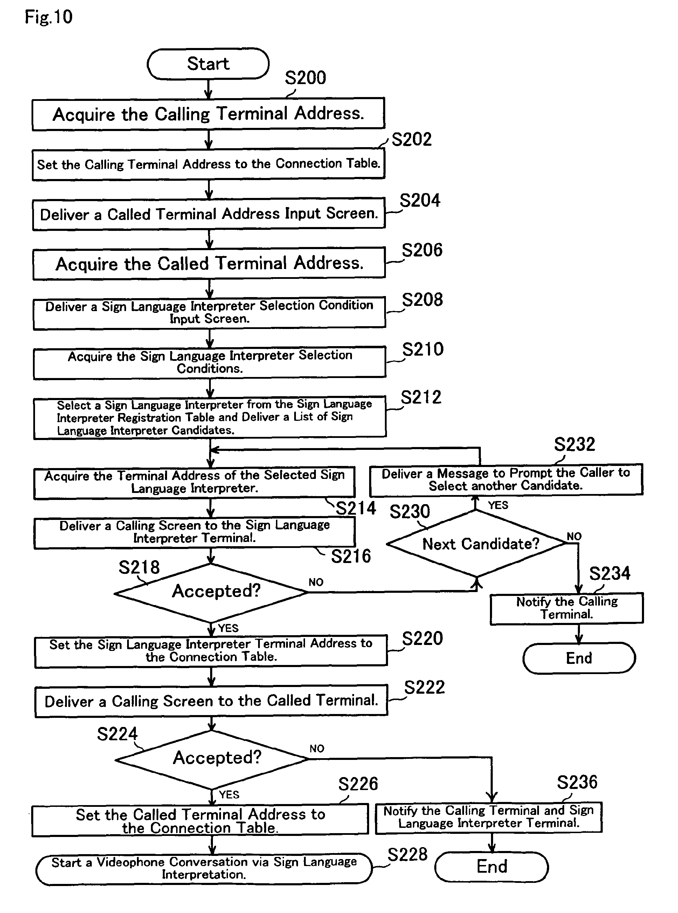

Fig. 10 is a processing flowchart of a connection procedure by the web server 410. The sign language interpretation system 400 also permits a deaf-mute person terminal or non-deaf-mute person terminal to request a sign language interpretation service. A deaf-mute person or a non-deaf-mute person wishing to request a sign language interpretation service accesses the web server 410 in the sign language interpretation center using a web browser to log in from each terminal, which starts the acceptance of the sign language interpretation service.

As shown in Fig. 10, the web server 410 first acquires the terminal address of a caller (S200) and sets the terminal address to the connection table 422 (S202). Next, the web server delivers a screen to prompt input of the called terminal address, similar to that shown in Fig. 5, to the calling terminal (S204). The called terminal address input by the caller is acquired (S206). The web server delivers a screen to prompt input of the selection conditions for a sign language interpreter, similar to that shown in Fig. 6, to the calling terminal (S208). The sign language interpreter selection conditions input by the caller are acquired (S210).

Next, a sign language interpreter with availability flag set is selected from among the sign language interpreters satisfying the selection conditions acquired from the sign language interpreter registration table 412. The web server 410 delivers a list of sign language interpreter candidates similar to that shown in Fig. 7 to the calling terminal to prompt input of the selection number of a desired sign language interpreter (S212). The selection number of the sign language interpreter input by the caller is acquired and the terminal address of the selected sign language interpreter is acquired from the sign language interpreter registration table 412 (S214). Based on the acquired terminal address of the sign language interpreter, the web server 410 delivers a calling screen to the sign language interpreter terminal (S216). If the call is accepted by the sign language interpreter (S218), the terminal address of the sign language interpreter is set to the connection table 422 (S220). Next, the web server 410 delvers a calling screen to the called terminal based on the acquired called terminal address (S222). If the call is accepted by the called terminal (S224), the called terminal address is set to the connection table 422 (S226). Then, a videophone conversation via sign language interpretation starts (S228).

If the sign language interpreter terminal does not accept the call in S218, whether a next candidate is available is determined (S230). If a next candidate is available, the web server delivers a message to prompt the caller to select another candidate (S232) to the calling terminal, then execution returns to S214. If another candidate is not found, the calling terminal is notified (S234) and the call is released.

If the called terminal does not accept the call in S224, the calling terminal and the selected sign language interpreter terminal are notified (S236) and the call is released.

When the selected sign language interpreter terminal does not accept the call, the caller is notified and the call is released in the above embodiment, a sign language interpretation reservation table to register a calling terminal address and a called terminal address may be provided and the caller and the called party may be notified on a later response from the selected sign language interpreter to set a videophone conversation.

While the sign language interpreter terminal is located in the sign language interpretation system 400 of the sign language interpretation center in the above embodiment, the present invention is not limited thereto. Some or all of the sign language interpreter terminals may be provided outside the sign language interpretation center and connected via the Internet.

In the above embodiment, the configuration of the sign language interpretation system has been described where a videophone terminal used by a deaf-mute person, a non-deaf-mute person or a sign language interpreter is a telephone-type videophone terminal connected to a public telephone line, and where the videophone terminal is an IP-type videophone terminal connected to the Internet, the telephone-type videophone terminal and the IP-type videophone terminal can communicate with each other by arranging a gateway to perform protocol conversion therebetween. A sign language interpretation system conforming to one protocol may be provided via the gateway to support a videophone terminal conforming to the other protocol.

In this way, the sign language interpretation system enables the user to enjoy or provide a sign language interpretation service anywhere he/she may be, as long as he/she has a terminal which can be connected to a public telephone line or the Internet. A sign language interpreter does not always have to visit a sign language interpretation center but can present a sign language interpretation from his/her home or a facility or site where a videophone terminal is located, or provide a sign language interpretation service by using a cellular phone or a portable terminal equipped with a videophone function.

A person having sign language interpretation abilities may want to register in the sign language interpreter registration table in the sign language interpretation center in order to provide a sign language interpretation service anytime it is convenient to him/her. From the viewpoint of the operation of the sign language interpretation center, it is not necessary for the sign language interpreters to go to the center. This enables efficient operation of the sign language interpretation center both in terms of time and costs. In particular, the number of volunteer sign language interpreters is increasing presently. The sign language interpretation service can be provided from a sign language interpreter's home, which facilitates reservation of a sign language interpreter.

### Industrial Applicability

As mentioned above, according to the sign language interpretation system or sign language interpretation method of the invention, it is not necessary for a deaf-mute person, a non-deaf-mute person and a sign language interpreter to hold prior consultation to reserve an MCU, which satisfies an urgent need.

## Claims

1. A sign language interpretation system which interconnects a videophone terminal for deaf-mute persons used by a deaf-mute person capable of using sign language, a videophone terminal for non-deaf-mute persons used by a non-deaf-mute person incapable of using sign language, and a videophone terminal for the sign language interpreter used by the sign language interpreter in order to provide sign language interpretation in a conversation between a deaf-mute person and a non-deaf-mute person over a videophone, **characterized in that**
said system comprises connection means equipped with a sign language interpreter registration table where the terminal number of said videophone terminal for sign language interpreters is registered, said connection means including a function to accept a call from said videophone terminal for deaf-mute persons or said videophone terminal for non-deaf-mute persons, a function to prompt a calling videophone terminal for which said call is accepted to enter the terminal number of the called terminal, a function to extract the terminal number of a sign language interpreter from said sign language interpreter registration table, a function to call the videophone terminal for sign language interpreters by using said extracted terminal number of the sign language interpreter, and a function to call the called videophone terminal by using said acquired called terminal number and
communications means including a function to synthesize at least a video from said videophone terminal for non-deaf-mute persons and a video from said videophone terminal for sign language interpreters and transmit the resulting video to said videophone terminal for deaf-mute persons, a function to transmit at least a video from said videophone terminal for deaf-mute persons and a voice from said videophone terminal for sign language interpreters to said videophone terminal for non-deaf-mute persons and a function to transmit at least a video from said videophone terminal for deaf-mute persons and a voice from said videophone terminal for non-deaf-mute persons to said videophone terminal for sign language interpreters.

2. The sign language interpretation system according to claim 1, **characterized in that** selection information for selecting a sign language interpreter is registered in said sign language interpreter registration table and that
said connection means includes a function to acquire the conditions for selecting a sign language interpreter from said calling videophone terminal and a function to extract the terminal number of a sign language interpreter who satisfies said extracted selection conditions from said sign language interpreter registration table.

3. The sign language interpretation system according to claim 1 or 2, **characterized in that** an availability flag to indicate whether a sign language interpreter is available is registered in the sign language interpreter registration table and that
said connection means includes a function to extract the terminal number of an available sign language interpreter by referencing the availability flags in the sign language interpreter registration table.

4. The sign language interpretation system according to any one of claims 1 through 3, **characterized in that** said connection means includes a function to generate a text message to be transmitted to each of said terminals and that
said communications means includes a function to transmit said generated text message to each of said terminals.

5. The sign language interpretation system according to claim 4, **characterized in that** said connection means includes a function to generate a voice message to be transmitted to said terminal for non-deaf-mute persons and that
said communications means includes a function to transmit said generated voice message to said videophone terminal for non-deaf-mute persons.

6. The sign language interpretation system according to any one of claims 1 through 5, **characterized in that** said connection means includes a function to register a term used during a conversation as instructed from each of said terminals and a function to extract said registered term and generate a telop as instructed from each of said terminals and that
said communications means includes a function to transmit said generated telop to each of said terminals.

7. The sign language interpretation system according to any one of Claims 1 through 6, **characterized in that** said communications means includes a function to transmit a video obtained by synthesizing a video from said videophone terminal for non-deaf-mute persons or said videophone terminal for sign language interpreters as a main window and the other video as a sub window to said videophone terminal for deaf-mute persons.

8. The sign language interpretation system according to any one of claims 1 through 7, **characterized in that** said communications means includes a function to transmit a video obtained by synthesizing a video from said videophone terminal for non-deaf-mute persons as a main window and a video from said videophone terminal for sign language interpreters as a sub window to said videophone terminal for non-deaf-mute persons.

9. The sign language interpretation system according to any one of claims 1 through 8, **characterized in that** said communications means includes a function to transmit a video obtained by synthesizing a video from said videophone terminal for deaf-mute persons and a video from said videophone terminal for non-deaf-mute persons to said videophone terminal for sign language interpreters.

10. A method for providing sign language interpretation in a conversation between a deaf-mute person and a non-deaf-mute person over a videophone, said method interconnecting a videophone terminal for deaf-mute persons used by a deaf-mute person capable of using sign language, a videophone terminal for non-deaf-mute persons used by a non-deaf-mute person incapable of using sign language, and a videophone terminal for the sign language interpreter used by the sign interpreter,
**characterized in that** a sign language interpreter registration table where the terminal number of said videophone terminal for sign language interpreters is registered, said method comprising steps of: accepting a call from said videophone terminal for deaf-mute persons or said videophone terminal for non-deaf-mute persons; acquiring the terminal number of a called terminal from said calling videophone terminal for which said call is accepted; extracting the terminal number of a sign language interpreter from said sign language interpreter registration table; calling the videophone terminal for sign language interpreters by using said extracted terminal number of the sign language interpreter; calling the called videophone terminal by using said acquired called terminal number;
synthesizing at least a video from said videophone terminal for non-deaf-mute persons and a video from said videophone terminal for sign language interpreters and transmitting the resulting video to said videophone terminal for deaf-mute persons; transmitting at least a video from said videophone terminal for deaf-mute persons and a voice from said videophone terminal for sign language interpreters to said videophone terminal for non-deaf-mute persons; and transmitting at least a video from said videophone terminal for deaf-mute persons and a voice from said videophone terminal for non-deaf-mute persons to said videophone terminal for sign language interpreters.
